# EUROPÄISCHE PATENTSCHRIFT

(11) **EP 3 505 372 B1**
(45) Veröffentlichungstag und Bekanntmachung des Hinweises auf die Patenterteilung: **11.08.2021**
(21) Anmeldenummer: 18211473.6
(22) Anmeldetag: 11.12.2018
(51) Int. Cl.: B60C 23/04

(54) **VERFAHREN ZUM BETREIBEN EINER REIFENDRUCKÜBERWACHUNGSEINHEIT**
METHOD FOR OPERATING A TYRE PRESSURE MONITORING UNIT
PROCÉDÉ DE FONCTIONNEMENT D'UNE UNITÉ DE SURVEILLANCE DE PRESSION DE PNEUMATIQUES

(30) Priorität: 27.12.2017 DE 102017131302
(43) Veröffentlichungstag der Anmeldung: 03.07.2019
(73) Patentinhaber: Huf Baolong Electronics Bretten GmbH, 75015 Bretten (DE)
(72) Erfinder: Vögeli, Patrick, 76227 Karlsruhe (DE); Wagner, Markus, 71638 Ludwigsburg (DE)
(74) Vertreter: Twelmeier Mommer & Partner

(56) Entgegenhaltungen:
- EP-A1- 3 243 672
- WO-A1-2015/107203
- DE-U1-202015 101 654
- US-A1- 2016 339 750
- US-A1- 2017 282 855

## Beschreibung

Die Erfindung betrifft ein Verfahren zum Betreiben einer Reifendrucküberwachungseinheit, insbesondere die drahtlose Kommunikation einer Reifendrucküberwachungseinheit mit einer Zentraleinheit eines Reifendrucküberwachungssystems. Ein Verfahren mit den im Oberbegriff des Anspruchs 1 angegeben Merkmalen ist aus EP 3 243 672 A1 bekannt. Ein ähnliches Verfahren ist aus US 2016/0339750 A1 bekannt.

Reifendrucküberwachungseinheiten enthalten einen Drucksensor zur Messung des Reifendrucks und eine Sendeeinrichtung zum Senden von Druckdaten. Reifendrucküberwachungseinheiten senden Druckdaten an eine Zentraleinheit des Reifendrucküberwachungssystems in der Regel in Form von Datentelegrammen, die eine charakteristische Kennung enthalten, die es einer Zentraleinheit des Fahrzeugs ermöglicht, ein empfangenes Datentelegramm einer Radposition zu zuordnen, und verhindert, dass von Reifendrucküberwachungseinheiten anderer Fahrzeuge gesendete Datentelegramme ausgewertet werden.

Reifendrucküberwachungssysteme werden zunehmend in Fahrzeugsicherheitssysteme integriert, die in kritischen Situationen in die Steuerung des Fahrzeugs eingreifen, beispielsweise indem sie bei Erhalt von Druckdaten, die einen platzenden Reifen anzeigen, eine Vollbremsung des Fahrzeugs einleiten.

Die Verwendung von charakteristischen Kennungen schützt zwar davor, dass zufällig empfangene Datentelegramme von Reifendrucküberwachungseinheiten anderer Fahrzeuge auf die Steuerung eines Fahrzeugs Einfluss nehmen, bietet aber nur einen unzureichenden Schutz vor gezielter Manipulation, etwa mittels eines Datentelegramms, das gezielt erzeugt und gesendet wird, um ein Fahrzeug zum Abbremsen und Anhalten zu zwingen. Da Reifendrucküberwachungseinheiten ihre charakteristische Kennung mit jedem Datentelegramm aussenden, kann diese charakteristische Kennung grundsätzlich von Dritten in Erfahrung gebracht und dann verwendet werden, um falsche Datentelegramme zur Täuschung eines Fahrzeugsicherheitssystems zu erzeugen.

Aufgabe der vorliegenden Erfindung ist es, einen Weg aufzuzeigen, wie die Sicherheit eines Reifendrucküberwachungssystems erhöht und eine dafür geeignete Reifendrucküberwachungseinheit geschaffen werden kann.

Diese Aufgabe wird durch ein Verfahren zum Bertreiben einer Reifendrucküberwachungseinheit mit den im Anspruch 1 angegebenen Merkmalen gelöst. Vorteilhafte Weiterbildungen der Erfindung sind Gegenstand von Unteransprüchen.

Bei einem erfindungsgemäßen Verfahren nutzt die Reifendrucküberwachungseinheit den Industriestandard Bluetooth Low Energy, im folgenden BLE, um drahtlos mit einer Zentraleinheit des Reifendrucküberwachungssystems zu kommunizieren, insbesondere um Druckdaten zu übertragen.

Mit BLE werden Daten im Frequenzbereich von 2,4 GHz übertragen. Dabei wird das ISM Frequenzband mit 40 Kanälen in einer Breite von jeweils 2 MHz unterteilt. Bei der Datenübertragung können einzelne Kanäle nach einem zwischen Sender und Empfänger ausgetauschten Schema gewechselt werden und zusätzlich verschlüsselt werden. Das Übertragen von Daten in ständig wechselnden Kanälen nach einem zwischen Sender und Empfänger ausgetauschten Schema bezeichnet man als einen abgesicherten Verbindungsmodus bzw. eine (abgesicherte) Verbindung. Manchmal wird auch der englische Begriff "connected mode" verwendet. Indem eine Reifendrucküberwachungseinheit Druckdaten mittels BLE in einem abgesicherten Verbindungsmodus übermittelt, lässt sich die Sicherheit der Übertragung wesentlich erhöhen und praktisch ausschließen, dass die Zentraleinheit des Reifendrucküberwachungssystems durch falsche Datentelegramme getäuscht wird. Bereits durch den ständigen Wechsel der Kanäle wird die Zentraleinheit vor falschen oder gefälschten Datentelegrammen geschützt. Um die Sicherheit zusätzlich zu erhöhen, können die von der Reifendrucküberwachungseinheit ausgesendeten Datentelegramme zusätzlich verschlüsselt werden.

Damit eine Reifendrucküberwachungseinheit mit einer Zentraleinheit des Reifendrucküberwachungssystems eines Fahrzeugs eine abgesicherte Verbindung aufbauen kann, müssen sich zunächst die Reifendrucküberwachungseinheit und die Zentraleinheit auf ein Schema einigen, nach dem die Kanäle bei der Übertragung gewechselt werden. Dazu werden von der Sendeeinrichtung bei Fahrtbeginn Funksignale gemäß BLE in einem advertising mode gesendet, um mit einer Zentraleinheit des Fahrzeugs zunächst eine Verbindung aufzubauen. Der advertising mode wird manchmal auch als broadcasting mode bezeichnet. Sobald eine Verbindung aufgebaut ist, können dann während der Fahrt Daten in einem abgesicherten Verbindungsmodus von der Sendeeinrichtung an die Zentraleinheit gesendet werden.

Bei einem erfindungsgemäßen Verfahren zum Betreiben einer Reifendrucküberwachungseinheit bzw. zum Betreiben eines Reifendrucküberwachungssystems mit mehreren Reifendrucküberwachungseinheiten und einer Zentraleinheit, können Druckdaten, sobald eine Verbindung zwischen einer Reifendrucküberwachungseinheit und der Zentraleinheit aufgebaut ist, während der gesamten Fahrt in einem abgesicherten Verbindungsmodus übertragen werden. Grundsätzlich ist es dabei möglich den abgesicherten Verbindungsmodus nur für besonders kritische Abschnitte einer Fahrt zu verwenden, beispielsweise während des Fahrtbeginns, wenn die Zentraleinheit eine charakteristische Kennung einer Reifendrucküberwachungseinheit einer bestimmten Radposition zuordnet. Bevorzugt ist aber, dass ein einmal etablierter abgesicherter Verbindungsmodus zwischen einer Reifendrucküberwachungseinheit und der Zentraleinheit während der gesamten Fahrt beibehalten wird.

Erfindungsgemäß ist vorgesehen, dass Druckdaten bei parkendem Fahrzeug in dem advertising mode gesendet werden. Mit anderen Worten wird also ein abgesicherter Verbindungsmodus beendet, sobald ein Fahrzeug parkt. Bei parkendem Fahrzeug müssen Druckdaten nämlich nur in relativ großen Zeitabständen übertragen werden. Um Sendeenergie einzusparen, kann es für das Fahrzeug vorteilhaft sein, bei parkendem Fahrzeug keinen abgesicherten Verbindungsmodus aufrecht zu erhalten, der einen steten Datenaustausch zwischen Reifendrucküberwachungseinheit und Zentraleinheit erforderlich macht.

Eine weitere vorteilhafte Weiterbildung der Erfindung sieht vor, dass von der Reifendrucküberwachungseinheit eine Verbindung mit der Zentraleinheit aufgebaut und Druckdaten in dem abgesicherten Verbindungsmodus übertragen werden, wenn von der Reifendrucküberwachungseinheit bei parkendem Fahrzeug ein Druckanstieg festgestellt wird. Ein Druckanstieg bei parkendem Fahrzeug deutet darauf hin, dass der betreffende Reifen des Fahrzeugs aufgepumpt wird. Beim Aufpumpen des Reifens ändert sich dessen Druck in relativ kurzer Zeit erheblich, so dass die Reifendrucküberwachungseinheit den Reifendruck bevorzugt sehr häufig misst und in kurzen Zeitabständen an die Zentraleinheit überträgt. Hier kann ein abgesicherter Verbindungsmodus besonders vorteilhaft genutzt werden.

Eine weitere vorteilhafte Weiterbildung der Erfindung sieht vor, dass die Zentraleinheit des Fahrzeugs beim Empfang von Daten in dem abgesicherten Verbindungsmodus den Empfangspegel erfasst und mit einem oder mehreren Schwellenwerten vergleicht. Wenn der Empfangspegel unnötig groß ist, kann Sendeenergie eingespart werden, indem die Zentraleinheit des Fahrzeugs über den abgesicherten Verbindungsmodus der Reifendrucküberwachungseinheit mitteilt, dass die Sendeenergie künftig reduziert werden soll. Umgekehrt kann die Zentraleinheit des Fahrzeugs der Reifendrucküberwachungseinheit auch mitteilen, dass die Sendeenergie erhöht werden soll, wenn der Empfangspegel so niedrig ist, dass eine zuverlässige Übertragung gefährdet ist. Vorteilhaft kann so die abgesicherte Verbindung bei einer Übertragung nach BLE genutzt werden, um die Sendeenergie bzw. Sendeleistung einer Reifendrucküberwachungseinheit zu optimieren und so den Energieverbrauch einer Reifendrucküberwachungseinheit insgesamt zu reduzieren.

Bei herkömmlichen Verfahren zum Betreiben einer Reifendrucküberwachungseinheit können die Sendeenergie und die Sendeleistung nicht sinnvoll reduziert werden und werden deshalb bei der Herstellung so eingestellt, so dass bei praktisch jedem Fahrzeugtyp auch unter widrigen Umständen noch ein zuverlässiger Empfang der von den Reifendrucküberwachungseinheiten ausgesandten Signale durch die Zentraleinheit des Reifendrucküberwachungssystems möglich ist. Die beschriebene Vorgehensweise ermöglicht es, die Sendeenergie zu reduzieren, wenn die Übertragungsbedingungen günstig sind und auch mit reduzierter Sendeleistung Datentelegramme mit einem ausreichender Signalpegel von der Zentraleinheit des Fahrzeugs empfangen werden.

Bei einem erfindungsgemäßen Verfahren zum Betreiben einer Reifendrucküberwachungseinrichtung bzw. bei einem erfindungsgemäßen Verfahren zum Betreiben eines Reifendrucküberwachungssystems mit mehreren Reifendrucküberwachungseinheiten und einer Zentraleinheit, kann deshalb vorgesehen sein, dass die Zentraleinheit den Empfangspegel erfasst, mit dem von der Reifendrucküberwachungseinheit gesendete Daten in dem abgesicherten Verbindungsmodus von der Zentraleinheit empfangen werden. Die Zentraleinheit vergleicht diesen Empfangspegel dann mit einem oberen Schwellenwert. Wenn der Empfangspegel den oberen Schwellenwert überschreitet, sendet die Zentraleinheit über die abgesicherte Verbindung einen Befehl an die Reifendrucküberwachungseinheit, die Sendeenergie bzw. die Sendeleistung zu reduzieren. Wenn die Reifendrucküberwachungseinheit über den abgesicherte Verbindung einen solchen Befehl erhält, reduziert sie die Sendeenergie und sendet nun mit einer reduzierten elektrischen Leistung, solange der abgesicherte Verbindungsmodus bestehen bleibt. Die Reifendrucküberwachungseinheit kann die Sendeenergie bzw. die Sendeleistung auf Anweisung der Zentraleinheit um einen festen Wert, einen von der Zentraleinheit des Fahrzeugs vorgegebenen Wert oder auch um einen prozentualen Anteil reduzieren.

In entsprechender Weise kann die Zentraleinheit des Fahrzeugs die Sendeeinrichtung anweisen, die Sendeenergie bzw. die Sendeleistung bei Übertragung von Daten in dem abgesicherten Verbindungsmodus zu erhöhen, wenn der Empfangspegel unter einem unteren Schwellenwert liegt.

Eine weitere vorteilhafte Weiterbildung der Erfindung sieht vor, dass die Reifendrucküberwachungseinheit von der Zentraleinheit auch instruiert werden kann, in Zukunft in dem advertising mode eine reduzierte Sendeenergie bzw. Sendeleistung zu verwenden, wenn bei vorangegangenen Datenübertragungen in den abgesicherten Verbindungsmodus ein Empfangspegel festgestellt wurde, der einen oberen Schwellenwert überschreitet. Ebenso kann die Reifendrucküberwachungseinheit von der Zentraleinheit veranlasst werden, in dem advertising mode künftig eine höhere Sendeenergie bzw. Sendeleistung zu verwenden, wenn in einem vorangegangenen abgesicherten Verbindungsmodus von der Zentraleinheit ein Empfangspegel festgestellt wurde, der unter einem unteren Schwellenwert liegt.

Bevorzugt ist dabei, dass die Reifendrucküberwachungseinheit die im advertising mode eingesetzte Sendenergie bzw. Sendeleistung wieder auf einen Ausgangswert zurücksetzt, sobald eine vorgegebene Zeitspanne im advertising mode vergangen ist, beispielsweise eine Zeitspanne von 2 bis 24 Stunden. Dazu kann beispielsweise ein Zähler verwendet werden, der jedes Mal zurückgesetzt wird, wenn die Reifendrucküberwachungseinheit erneut aus dem Verbindungsmodus in den advertising modus übergeht.

## Patentansprüche

1. Verfahren zum Betreiben einer Reifendrucküberwachungseinheit, die einen Drucksensor zur Messung des Reifendrucks, eine Sendeeinrichtung zum Senden von Reifendruckdaten und eine Stromquelle zur Versorgung des Drucksensors und der Sendeeinheit enthält,
wobei von der Sendeeinrichtung bei Fahrtbeginn Funksignale gemäß dem Industriestandard Bluetooth Low Energy (BLE) in einem advertising mode gesendet werden, um mit einer Zentraleinheit des Fahrzeugs eine Verbindung aufzubauen, und
dann während der Fahrt Daten in einem abgesicherten Verbindungsmodus von der Sendeeinrichtung an die Zentraleinheit gesendet werden, **dadurch gekennzeichnet, dass** Druckdaten bei parkendem Fahrzeug in dem advertising mode gesendet werden.

2. Verfahren nach einem der vorstehenden Ansprüche, **dadurch gekennzeichnet, dass** von der Reifendrucküberwachungseinheit eine Verbindung mit der Zentraleinheit aufgebaut und Druckdaten in dem abgesicherten Verbindungsmodus übertragen werden, wenn von der Reifendrucküberwachungseinheit bei parkendem Fahrzeug ein Druckanstieg festgestellt wird.

3. Verfahren nach einem der vorstehenden Ansprüche, **dadurch gekennzeichnet, dass** beim Empfang von Daten in dem abgesicherten Verbindungsmodus der Empfangspegel von der Zentraleinheit des Fahrzeugs erfasst und mit einem oberen Schwellenwert verglichen wird, und
wenn der Empfangspegel den oberen Schwellenwert überschreitet, von der Zentraleinheit ein Befehl an die Reifendrucküberwachungseinheit gesendet wird, der die Reifendrucküberwachungseinheit veranlasst, die Sendeleistung zu reduzieren, mit der die Reifendrucküberwachungseinheit in dem abgesicherten Verbindungsmodus sendet.

4. Verfahren nach Anspruch 3, **dadurch gekennzeichnet, dass** wenn der Empfangspegel den oberen Schwellenwert überschreitet, von der Zentraleinheit ein Befehl an die Reifendrucküberwachungseinheit gesendet wird, der die Reifendrucküberwachungseinheit veranlasst, die Sendeleistung zu reduzieren, mit der die Reifendrucküberwachungseinheit in dem advertising modus sendet.

5. Verfahren nach Anspruch 4, **dadurch gekennzeichnet, dass** die Reifendrucküberwachungseinheit die Sendeleistung wieder auf einen Ausgangswert zurücksetzt, sobald eine vorgegebenen Zeitspanne im advertising modus vergangen.

6. Verfahren nach einem der vorstehenden Ansprüche, **dadurch gekennzeichnet, dass** beim Empfang von Daten in dem abgesicherten Verbindungsmodus der Empfangspegel von der Zentraleinheit des Fahrzeugs erfasst und mit einem unteren Schwellenwert verglichen wird, und
wenn der Empfangspegel den unteren Schwellenwert unterschreitet, von der Zentraleinheit ein Befehl an die Reifendrucküberwachungseinheit gesendet wird, der die Reifendrucküberwachungseinheit veranlasst, die Sendeleistung zu erhöhen, mit der die Reifendrucküberwachungseinheit in dem abgesicherten Verbindungsmodus sendet.

7. Verfahren nach Anspruch 6, **dadurch gekennzeichnet, dass** wenn der Empfangspegel den unteren Schwellenwert überschreitet, von der Zentraleinheit ein Befehl an die Reifendrucküberwachungseinheit gesendet wird, der die Reifendrucküberwachungseinheit veranlasst, die Sendeleistung zu erhöhen, mit der die Reifendrucküberwachungseinheit in dem advertising modus sendet.

8. Verfahren nach Anspruch 7, **dadurch gekennzeichnet, dass** die Reifendrucküberwachungseinheit die Sendeleistung wieder auf einen Ausgangswert zurücksetzt, sobald eine vorgegebene Zeitspanne im advertising modus vergangen ist.

## Claims

1. A method for operating a tire pressure monitoring unit comprising a pressure sensor for measuring tire pressure, a transmission device for transmitting tire pressure data and a power source for supplying the pressure sensor and the transmission device,
wherein radio signals according to the industry standard Bluetooth Low Energy (BLE) are transmitted in an advertising mode by the transmitting device at the start of a journey in order to establish a connection with a central unit of the vehicle, and
then, while driving, data are transmitted from the transmitting device to the central unit in a secure connection mode, **characterized in that** pressure data are transmitted in the advertising mode when the vehicle is parked.

2. The method according to any one of the preceding claims, **characterized in that** the tire pressure monitoring unit establishes a connection with the central unit and pressure data are transmitted in the secured connection mode when the tire pressure monitoring unit determines a pressure increase when the vehicle is parked.

3. The method according to any one of the preceding claims, **characterized in that** when data are received in the secure connection mode, the reception level is detected by the central unit of the vehicle and compared with an upper threshold value, and
when the reception level exceeds the upper threshold value, the central unit transmits a command to the tire pressure monitoring unit, which command causes the tire pressure monitoring unit to reduce the transmission power with which the tire pressure monitoring unit transmits in the secure connection mode.

4. The method according to claim 3, **characterized in that** when the reception level exceeds the upper threshold value, the central unit transmits a command to the tire pressure monitoring unit, which command causes the tire pressure monitoring unit to reduce the transmission power with which the tire pressure monitoring unit transmits in the advertising mode.

5. The method according to claim 4, **characterized in that** the tire pressure monitoring unit resets the transmission power back to an initial value as soon as a predetermined period of time has passed in the advertising mode.

6. The method according to any one of the preceding claims, **characterized in that** when data are received in the secure connection mode, the reception level is detected by the central unit of the vehicle and compared with a lower threshold value, and
when the reception level falls below the lower threshold value, the central unit transmits a command to the tire pressure monitoring unit, which command causes the tire pressure monitoring unit to increase the transmission power with which the tire pressure monitoring unit transmits in the secure connection mode.

7. The method according to claim 6, **characterized in that** when the reception level falls below the lower threshold value, the central unit transmits a command to the tire pressure monitoring unit, which command causes the tire pressure monitoring unit to increase the transmission power with which the tire pressure monitoring unit transmits in the advertising mode.

8. The method according to claim 7, **characterized in that** the tire pressure monitoring unit resets the transmission power back to an initial value as soon as a predetermined period of time has passed in the advertising mode.

## Revendications

1. Procédé destiné à faire fonctionner une unité de surveillance de pression de pneumatique, qui contient un capteur de pression pour mesurer la pression de pneumatique, un dispositif d'émission pour émettre des données de pression de pneumatique et une source de courant pour alimenter le capteur de pression et l'unité d'émission,
sachant que des signaux radio sont émis par le dispositif d'émission en début de trajet dans un mode de signalisation (advertising mode) selon la norme industrielle Bluetooth Faible Energie (BLE) pour établir une liaison avec une unité centrale du véhicule, et
des données sont ensuite envoyées pendant le trajet dans un mode de liaison sécurisé par le dispositif d'émission à l'unité centrale, **caractérisé en ce que** les données de pression sont envoyées en mode de signalisation (advertising mode) lorsque le véhicule est en cours de stationnement.

2. Procédé selon la revendication précédente, **caractérisé en ce qu'**une liaison est établie avec l'unité centrale par l'unité de surveillance de pression de pneumatique et des données de pression sont transmises dans le mode de liaison sécurisé, lorsqu'une hausse de pression est constatée par l'unité de surveillance de pression de pneumatique, lorsque le véhicule est en cours de stationnement.

3. Procédé selon l'une quelconque des revendications précédentes, **caractérisé en ce que** lors de la réception de données en mode de liaison sécurisé, le niveau de réception est saisi par l'unité centrale du véhicule et est comparé à une valeur seuil supérieure, et
lorsque le niveau de réception dépasse la valeur seuil supérieure, un ordre est envoyé par l'unité centrale à l'unité de surveillance de pression de pneumatique, qui incite l'unité de surveillance de pression des pneumatiques à réduire la puissance d'émission avec laquelle l'unité de surveillance de pression de pneumatique émet dans le mode de liaison sécurisé.

4. Procédé selon la revendication 3, **caractérisé en ce que** lorsque le niveau de réception dépasse la valeur seuil supérieure, un ordre est envoyé par l'unité centrale à l'unité de surveillance de pression de pneumatique, qui incite l'unité de surveillance de pression de pneumatique à réduire la puissance d'émission avec laquelle l'unité de surveillance de pression de pneumatique émet dans le mode de signalisation.

5. Procédé selon la revendication 4, **caractérisé en ce que** l'unité de surveillance de pression de pneumatique remet la puissance d'émission à nouveau à une valeur initiale dès qu'une période de temps prédéfinie est passée en mode de signalisation.

6. Procédé selon l'une quelconque des revendications précédentes, **caractérisé en ce que** lors de la réception de données dans le mode de liaison sécurisé, le niveau de réception est saisi par l'unité centrale du véhicule et est comparé à une valeur seuil inférieure, et
lorsque le niveau de réception dépasse inférieurement la valeur seuil inférieure, un ordre est envoyé par l'unité centrale à l'unité de surveillance de pression de pneumatique, qui incite l'unité de surveillance de pression de pneumatique à augmenter la puissance d'émission avec laquelle l'unité de surveillance de pression de pneumatique émet en mode de liaison sécurisé.

7. Procédé selon la revendication 6, **caractérisé en ce que** le niveau de réception dépasse la valeur seuil inférieure, un ordre est envoyé par l'unité centrale à l'unité de surveillance de pression de pneumatique, qui incite l'unité de surveillance de pression de pneumatique à augmenter la puissance d'émission avec laquelle l'unité de surveillance de pression de pneumatique émet en mode de signalisation.

8. Procédé selon la revendication 7, **caractérisé en ce que** l'unité de surveillance de pression de pneumatique remet la puissance d'émission à nouveau à une valeur initiale dès qu'une période de temps prédéfinie est passée en mode de signalisation.
